# EUROPEAN PATENT SPECIFICATION

(11) **EP 2 714 246 B1**
(45) Date of publication and mention of the grant of the patent: **31.12.2014**
(21) Application number: 11729477.7
(22) Date of filing: 24.05.2011
(51) Int. Cl.: B01D 53/94, B01J 23/52, B01J 23/89, B01J 35/00, B01J 37/02

(54) **EXHAUST PURIFICATION SYSTEM**
ABGASREINIGUNGSSYSTEM
SYSTÈME DE PURIFICATION D'ÉCHAPPEMENT

(43) Date of publication of application: 09.04.2014
(73) Proprietor: Toyota Jidosha Kabushiki Kaisha, Toyota-shi, Aichi 471-8571 (JP)
(72) Inventor: OSAKI, Mayuko, Toyota-shi Aichi 471-8571 (JP); HIRATA, Hirohito, Toyota-shi Aichi 471-8571 (JP); LEPAGE, Muriel, B-1140 Brussels (BE)
(74) Representative: Intès, Didier Gérard André
(86) International application number: PCT/JP2011/062315
(87) International publication number: WO 2012/160708

(56) References cited:
- JP-A- 10 216 519
- US-A- 5 977 012
- US-A1- 2007 166 220

## Description

### BACKGROUND OF THE INVENTION

### 1. Field of the Invention

The present invention relates to an exhaust purification system provided with a nitrogen oxide (below, sometimes abbreviated as "NOₓ") purification catalyst, more particularly relates to an exhaust gas purification system having an NOₓ purification performance even for an exhaust gas composition including hydrocarbons (below, sometimes abbreviated as "HC") and oxygen (below, sometimes abbreviated as "O₂").

### 2. Description of the Related Art

In recent years, from the viewpoint of protection of the global environment, exhaust gas regulations have been toughened around the world with each passing year. As one means for dealing with this, in internal combustion engines, exhaust gas purification catalysts are being used. In such exhaust gas purification catalysts, to efficiently remove HC (hydrocarbons), carbon monoxide (CO), and NOₓ in the exhaust gas, as catalyst ingredients, platinum, palladium, rhodium, and other precious metals are being used. In motor vehicles using such purification catalysts, for example, gasoline engine vehicles and diesel engine vehicles, various systems are being used to improve the catalytic activity and the fuel economy. For example, for improving fuel economy, during steady state operation, fuel is being burned under conditions of a lean (excess oxygen) air-fuel ratio (A/F), while to improve the catalytic activity, fuel is being burned under temporarily stoichiometric (stoichiometric air-fuel ratio, A/F=14.7) to rich (excess fuel) conditions.

This is because conventionally known platinum, palladium, rhodium, and other precious metal catalysts have low NOₓ purification performances at low temperature and oxidizing conditions. To improve the purification performance, the purification catalyst has to be made high in temperature and HC or CO etc. has to be added to establish a reducing atmosphere. Due to the effects on the catalytic activity, even during steady state operation, it is not possible to increase the air-fuel ratio (A/F). With the above precious metal catalysts, there is therefore a limit to the improvement of the fuel economy. In such conventionally known precious metal catalysts, to obtain good purification performance, energy for raising the purification catalysts to a high temperature, fuel for temporarily making the purification catalysts a reducing atmosphere, and reduction of the air-fuel ratio (A/F) at the engine become necessary. To improve the fuel economy in automobile engines and other internal combustion engines, therefore, a new purification catalyst able to exhibit a good NOₓ purification performance at a low temperature and/or oxidizing atmosphere is being sought. On the other hand, all of the above precious metal catalysts face the problem of resource depletion. Catalysts using other metals to obtain purification performances equal to or better than those of conventional precious metal catalysts or exhaust purification catalysts able to reduce the amounts of the precious metals used are therefore being sought.
For this reason, various improvements are being experimented with for purification catalysts.

For example, Japanese Patent Publication (A) No. 10-216518 describes a gold alloy catalyst comprised of gold and one or more metals (M) selected from platinum, palladium, silver, copper, and nickel, having a weight ratio Au/M of 1/9 to 9/1, and having an amount of solute gold in the alloy of 20 to 80 wt%. Further, the catalysts shown as specific examples in this publication are catalysts carrying a gold alloy of gold and a metal of palladium or platinum on an Al₂O₃ carrier. These exhibit a high NOₓ purification performance in a reducing atmosphere, but have a low NOₓ purification performance at a low temperature and/or oxidizing atmosphere.

Further, Japanese Patent Publication (A) No. 10-216519 describes a low temperature toxic gas purifying catalyst comprised of a carrier of a metal oxide or carbonaceous material on which ultrafine particles of at least one type of metal selected from platinum, palladium, rhodium, ruthenium, iridium, osmium, gold, silver, copper, magnesium, iron, and nickel is carried by using a high temperature high pressure fluid. Further, the catalysts shown as specific examples in this publication are purification catalysts carrying at least one type of element of platinum, palladium, rhodium, ruthenium, nickel, nickel, or gold. They exhibit an NOₓ purification performance in a reducing atmosphere.

As related art, therefore, there are the above Japanese Patent Publication (A) No. 10-216518, Japanese Patent Publication (A) No. 10-216519 and Japanese Patent Publication (A) No. 2001-239161.

### SUMMARY OF THE INVENTION

Therefore, with exhaust gas purification systems provided with these known NOₓ purification catalysts, it was difficult to reduce the amount of precious metal used and obtain good NOₓ purification performance at a low temperature and/or in an oxidizing atmosphere. This is because the NOₓ reaction activity of the NOₓ purification catalyst is affected by the composition of the exhaust gas. Therefore, an object of the present invention is to provide an exhaust gas purification system provided with an NOₓ purification catalyst reducing the amount of the precious metals used and able to give an NOₓ purification performance at a low temperature and/or in an oxidizing atmosphere and having an NOₓ purification performance even with an exhaust gas composition including an HC and O₂.

The present invention relates to an exhaust gas purification system provided with an NOₓ purification catalyst provided in an exhaust gas passage and comprised of carrier particles on which nanoparticles of an alloy of gold atoms and nickel atoms in close proximity are carried and an oxidation catalyst oxidizing the HC in the exhaust gas at a position at an upstream side of the NOₓ purification catalyst.

Summarizing the effects of the invention, according to the present invention, it is possible to provide a system provided with an NOₓ purification catalyst reducing the amount of use of precious metals and able to exhibit a good NOₓ purification performance at a low temperature and/or in an oxidizing atmosphere and having an NOₓ purification performance even for an exhaust gas composition including an HC and O₂ together with a low temperature and/or an oxidizing atmosphere.

### BRIEF DESCRIPTION OF THE DRAWINGS

These and other objects and features of the present invention will become clearer from the following description of the preferred embodiments given with reference to the attached drawings, wherein:
FIG. 1 is a graph showing a comparison of the NO purification characteristics of NOₓ purification catalysts obtained in a reference example and comparative examples;
FIG. 2 is a graph showing a comparison of the NO purification characteristics of NOₓ purification catalysts obtained in a reference invention example for exhaust gas of various types of gas compositions;
FIG. 3 is a schematic view showing an exhaust gas purification system of an example of the present invention;
FIG. 4 is a schematic view showing an exhaust gas purification system of another example of the present invention; and
FIG. 5 is a schematic view of an exhaust gas purification system outside the scope of the present invention.

### DESCRIPTION OF THE PREFERRED EMBODIMENTS

In the present invention, the exhaust gas purification system has to be provided with an NOₓ purification catalyst provided in an exhaust gas passage of an alloy of and comprising carrier particles on which nanoparticles gold atoms and nickel atoms in a state in close proximity are carried and an oxidation catalyst oxidizing the HC in the exhaust gas at a position at an upstream side of the NOₓ purification catalyst. Due to this, it is possible to reduce the amount of use of the precious metals, provide an NOₓ purification catalyst able to exhibit an NOₓ purification performance at a low temperature and/or in an oxidizing atmosphere, and obtain an NOₓ purification performance even with an exhaust gas composition containing HC and O₂ such as at the time of a non-steady state operation.

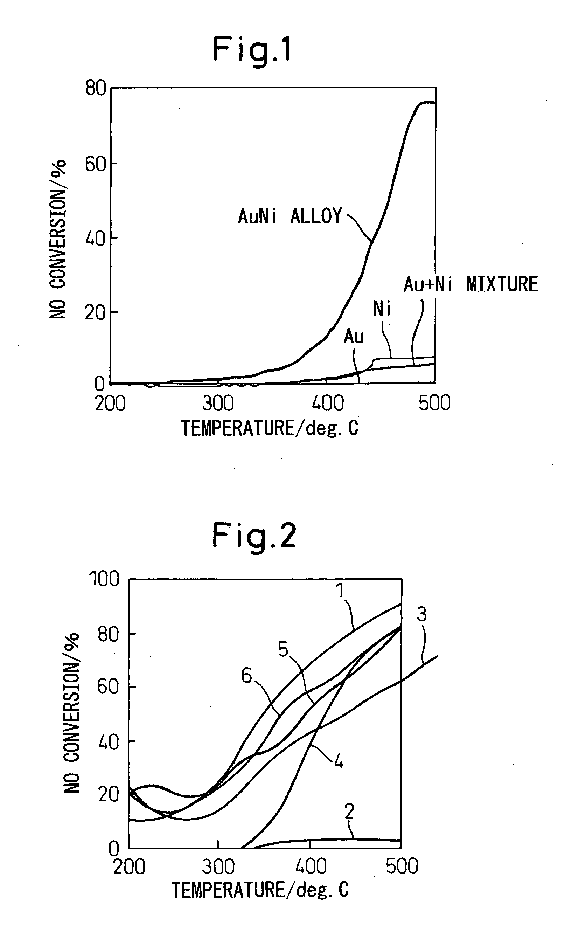

Below, embodiments of the present invention will be explained with reference to the drawings. Referring to FIG. 1, it is shown that the NOₓ purification catalyst comprised of carrier particles on which nanoparticles of an alloy of gold atoms and nickel atoms in a state in close proximity are carried according to an embodiment of present invention exhibits an NO-CO catalytic activity in a 300 to 500°C temperature range compared with NOₓ purification catalysts outside the scope of the present invention comprised of carrier particles on which nickel alone or gold alone is carried and has a particularly high NO-CO catalytic activity at a temperature of about 425 to 500°C. Further, with a simple mixture where, even when using gold and nickel together, the gold atoms and the nickel atoms are not included in a state of close proximity, the NO-CO catalytic activity at 500°C conversely becomes lower than a case of nickel alone.

Referring to FIG. 2, if using the NOₓ purification catalyst of the present invention to treat exhaust gas of various gas compositions, compared with the NO-CO gas composition of curve 1, in an about 425 to 500°C temperature range, with the NO-CO-O₂-C₃H₆ exhaust gas composition of curve 2 and the NO-CO-C₃H₃ exhaust gas composition curve 3, in particular the NO-CO-O₂-C₃H₆ exhaust gas composition of curve 2, the NO purification rate falls. Further, with the NO-CO-O₂ exhaust gas composition of curve 4, the NO-CO-CO₂ exhaust gas composition of curve 5, and the NO-CO-H₂O exhaust gas composition of curve 6, the NO purification rate is somewhat low, but a high NO purification rate is still achieved. That is, from FIG. 2, it will be understood that the NOₓ purification catalyst in the present invention greatly falls in NO purification activity with exhaust gas compositions in which the HC ingredient C₃H₆ is copresent with O₂ but is high in NO purification activity in gas compositions not containing C₃H₆.

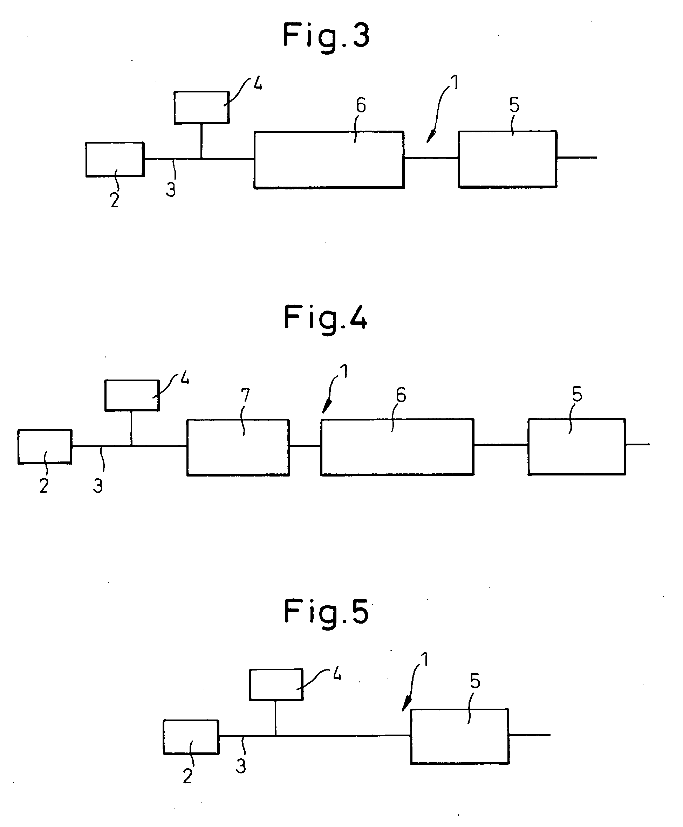

The present invention was made based on the above discovery. The exhaust gas purification system 1 of an embodiment of the present invention, as shown FIG. 3, is provided with an NOₓ purification catalyst 5 provided downstream of an A/F meter 4 of an exhaust gas passage 3 from an engine 2 and comprised of carrier particles on which nanoparticles in which gold atoms and nickel atoms are included in a state in close proximity are carried and an oxidation catalyst 6 oxidizing the HC in the exhaust gas at a position at an upstream side of the NOₓ purification catalyst 5.

Further, the exhaust gas purification system 1 of another embodiment of the present invention, as shown in FIG. 4, is further provided with an NOₓ purification catalyst 5 provided downstream of an A/F meter 4 of an exhaust gas passage from an engine 2, an oxidation catalyst 6 oxidizing HC in exhaust gas at a position at an upstream side of the NOₓ purification catalyst 5, and an HC adsorbent 7 adsorbing the HC in the exhaust gas at a position at a further upstream side from the oxidation catalyst 6 of the exhaust gas passage 3. In the exhaust gas purification system 1 which is shown in FIG. 4, the oxidation catalyst 6 and the HC absorbent 7 can be combined into a single brick catalyst.

Further, according to the exhaust gas purification system 1 shown in an embodiment of the present invention, even if exhaust gas exhausted from the engine is an exhaust gas composition containing an HC such as at the time of a non-steady state operation, the HC is removed by oxidation by the catalytic action of the oxidation catalyst 6, so the exhaust gas composition introduced into the NOₓ purification catalyst does not contain HC and O₂ together such as like with curve 4, curve 5, or curve 6 in FIG. 2 and therefore the NOₓ purification catalyst 5 can have a high NOₓ purification performance.

According to the exhaust gas purification system 1 shown in FIG. 4 of the embodiment of the present invention, even when the temperature is low and the oxidation catalyst 6 is low in catalytic activity, the HC adsorbent 7 adsorbs the HC, so until the oxidation catalyst 6 rises in catalytic activity, the composition of the exhaust gas introduced into the NOₓ purification catalyst will be an exhaust gas composition not containing an HC and therefore the NOₓ purification catalyst 5 can have a high NOₓ purification performance. In this way, even when the temperature is low, when the temperature rises due to engine operation, the HC which had been adsorbed at the HC adsorbent 7 is oxidized by the oxidation catalyst 6 improved in activity due to the temperature rise, CO₂ and H₂O are produced and removed, the composition of the exhaust gas introduced into the NOₓ purification catalyst does not contain HC and O₂ together, and the NOₓ purification catalyst 5 can have a high NOₓ purification performance. Note that, in the exhaust gas purification system 1 of the present invention, the HC adsorbent is not an essential component. For example, it is possible to find the temperature of the oxidation catalyst by a thermocouple (not shown), A/F meter, etc. and, when the oxidation catalyst for oxidation of the HC is low in temperature and it is predicted that it cannot sufficiently exhibit its oxidation performance, control the system to the lean side so as not to discharge unburned HC from the engine. Note that, while not illustrated in FIG. 3 and FIG. 4, an NOₓ sensor can be provided downstream of the NOₓ purification catalyst 5.

As opposed to this, the exhaust gas purification system 1 outside the scope of the present invention, as shown in FIG. 5, is provided with only a purification catalyst 5 provided downstream of the A/F meter 4 of the exhaust gas passage 3 from the engine 2. Further, according to the exhaust gas purification system outside the scope of the present invention shown in FIG. 5, in the case of the NO-CO-O₂-C₃H₆ exhaust gas composition of the curve 2 in FIG. 2, the NO purification efficiently ends up falling sharply. That is, according to the exhaust gas purification system outside the scope of the present invention shown in FIG. 5, with an exhaust gas composition including HC and O₂ such as at the time of a non-steady operation, sometimes the NOₓ purification performance is low. As the reason for the low NOₓ purification performance of the NOₓ purification catalyst with an exhaust gas composition containing HC and O₂ copresent in the following way, the reaction of the C₃H₆ and O₂, production of carbonyl, and inhibition of the NO reaction ability of the NOₓ purification catalyst, etc. may be considered.

The NOₓ purification catalyst of the present invention, in the above way, is comprised of carrier particles on which nanoparticles in which gold atoms and nickel atoms are included in a state in close proximity are carried. For this reason, other metal atoms able to alloy with the two atoms may be contained at the parts where the two atoms are in close proximity, but inert substances unable to alloy with the two atoms can be included only in a range where the state in which the two atoms are in close proximity can be secured. Therefore, the NOₓ purification catalyst in the present invention can be obtained, for example, by using nanoparticles of the material forming the carrier as the cores and obtaining non particles in which the two metals are in close proximity. As other metal atoms able to alloy with both atoms of the gold atoms and nickel atoms, for example, tungsten (W), which can improve the heat resistance of gold by alloying, may be mentioned. Further, as the carrier particles, Al₂O₃, SiO₂, CeO₂, CeO₂-ZrO₂, (hereinafter also sometimes as abbreviated as "CZ") and other metal oxide particles may be mentioned.

The NOₓ purification catalyst of the present invention can be obtained by making the carrier carry nanoparticles in which gold atoms and nickel atoms are included in a state of close proximity. The nanoparticles in which gold atoms and nickel atoms are included in a state of close proximity can be obtained by for example reducing a mixture of gold salts and nickel salts in the presence of a polymer protective material using a reducing agent, for example, a polyol. The reducing reaction is preferably performed in a solution, preferably an aqueous solution, while under agitation. After the end of the reducing reaction, the polymer protective material is separated and removed by any separating means, for example, centrifugal separation, extraction, etc., and the obtained colloid in which the gold atoms and nickel atoms are present in a state of close proximity is uniformly mixed with the carrier so as to make the carrier carry nanoparticles which include gold atoms and nickel atoms in a state of close proximity. Furthermore, exposing the carrier powder to an H₂ gas reducing atmosphere is preferable. The size of the Au-Ni particles with the gold atoms and nickel atoms contained in a state of close proximity can be 0.2 to 100 nm or so, for example, 1 to 20 nm or so.

As the gold salts, aurochloric acid (HAuCl₄), sodium chloroaurate, potassium chloroaurate, gold trisodium disulfite, potassium trisodium disulfite, etc. may be mentioned. As the nickel salt, for example, nickel sulfate, nickel nitrate, nickel chloride, nickel bromide, nickel acetate, nickel hydroxide, etc. may be mentioned. As the polyols, ethylene glycol, diethylene glycol, triethylene glycol, tetraethylene glycol, 1,2-propanediol, dipropylene glycol, 1,2-butanediol, 1,3-butanediol, 1,4-butanediol, 2,3-butanediol, 1,5-pentanediol, polyethylene glycol, etc. may be mentioned. To complete the reduction of the gold ions and nickel ions by the polyol, at the final stage of reduction, for example, boron dimethylamide, boron diethylamide, sodium borohydrate, boron hydride, or another boron compound can be used as a reducing agent. As the polymer protective material, poly-N-vinylpyrrolidone, polyacrylamide, N-vinylpyrrolidone and acrylic acid copolymer, polyvinylmethylketone, poly(4-vinylphenol), oxazoline polymer, polyalkylene imine, and other polymers containing functional groups may be mentioned.

The NOₓ purification catalyst of the present invention preferably has nanoparticles having gold and nickel as main ingredients in which the composition of the gold and nickel is Au:Ni=7 to 91:93 to 9 (at%), preferably 20 to 80:80 to 20 (at%), particularly preferably 40 to 60:60 to 40 (at%). If the composition of gold and nickel in the solid is outside that range, the NOₓ purification catalyst tends to drop in NOₓ purification performance. The NOₓ purification catalyst of the present invention combines gold and nickel and thereby has as a synergistic effect a superior NOₓ purification performance unable to be obtained by single ingredients and in particular has superior catalytic activity even compared with another alloy and rhodium or other single precious metals.

According to the NOₓ purification catalyst of the present invention, the heating temperature for raising the NOₓ purification activity, for example, the heating temperature by the heater, does not have to be made a high temperature like in the past. Even in an oxidizing atmosphere, this catalyst has an NOₓ purification ability, so use of fuel for making the atmosphere a reducing atmosphere becomes unnecessary or can be greatly reduced. Further, according to the NOₓ purification catalyst of the present invention, there is no need to lower the air-fuel ratio (A/F) at the engine. For example, at the time of steady state operation at a high air-fuel ratio (A/F), for example, stoichiometric, in the case of a gasoline engine, the A/F is larger than 14.7, for example, A/F≥20, while in the case of a diesel engine, A/F≥30 is possible.

In the present invention, in the above way, it is necessary to provide an oxidation catalyst oxidizing the HC in the exhaust gas at a position in the exhaust gas passage at the upstream side of the NOₓ purification catalyst. In the present invention, by configuring the system in this way, even when the exhaust gas exhausted from the engine is an exhaust gas composition including HC at the time of a non-steady operation, the HC is removed by oxidation by the catalytic action of the oxidation catalyst, so the exhaust gas composition introduced into the NOₓ purification catalyst does not contain HC and O₂ together, so the NOₓ purification catalyst can exhibit a high NOₓ purification performance. The oxidation catalyst oxidizing the HC is not particularly limited, but in general a known catalyst used as an oxidation catalyst of HC, for example, Pd/CeO₂, Ag/Al₂O₃, etc. may be mentioned.

Further, in the present invention, it is also possible to provide an HC adsorbent adsorbing the HC in the exhaust gas at a position in the exhaust gas passage at the upstream side of the oxidation catalyst. The HC adsorbent is not particularly limited, but a known material generally used as an adsorbent for HC, for example, zeolite, may be mentioned. The zeolite may also carry Cu, Zn, Al, or another metal.

According to the exhaust gas purification system of the present invention, the NOₓ purification performance can be improved even with an exhaust gas composition including HC and O₂ such as at the time of a non-steady operation.

### EXAMPLES

Below, examples of the present invention will be shown. In the following examples, the obtained catalysts were evaluated by the methods of measurement shown below.

### 1. Measurement of Alloy Composition of Catalyst

Measurement method: Measurement of composition of bulk as a whole by XRD (X-ray diffraction)
Measurement apparatus: RIGAKU RINT-2000

### 2. Measurement of Particle Shape and Particle Size Distribution of Alloy Nanoparticles

Measurement method 1: Measurement by TEM (transmission electron microscope)
TEM measurement apparatus: HITACHI HD-2000
Measurement method 2: Measurement by HRTEM (high resolution transmission electron microscope)
HRTEM Measurement apparatus: HITACHI HD2000

### 3. Measurement of Elemental Analysis of Alloy Nanoparticles

Measurement method: Measurement of ratio of composition by TEM-EDS (EDS: energy dispersive X-ray spectroscopy)
TEM-EDS measurement apparatus: HITACHI HD2000

### 4. Measurement of Catalytic Activity

Catalyst pellets were packed in a glass reaction tube and anchored by glass wool. A gas mixed in advance was run through the glass reaction tube. The gas temperature was raised by a temperature elevation rate of 20°C/min from 100°C to 500°C. The NO concentration was measured by an exhaust gas analyzer (HORIBA MEXA7100H) or MS (mass spectrometry). Note that, when running a gas not including H₂, the measurement was conducted at 500°C after hydrogen reduction.

### Reference Example 1

### 1) Synthesis of AuNi Nanoparticles

In a two-necked flask, 1.1 g of poly-n-vinylpyrrolidone (PVP) was added to 120 ml of anhydrous ethylene glycol. Into this mixture, 0.1404 g of nickel sulfate was added. The mixture was agitated at 80°C for 3 hours to obtain a solution (solution 1). Separately, in a two-necked flask, 0.1809 g of NaAuCl₄ was added to 50 ml of distilled water. The mixture was strongly agitated for 2 hours or more to cause dissolution and obtain a bright red colored solution (solution 2). The solution 1 was cooled by a cooling bath down to 0°C, then the solution 2 was poured into the solution 1 in the flask and the two were uniformly agitated. The mixed solution was adjusted by a 1M NaOH solution (about 5 ml) to give a pH of 9 to 10. The mixed solution was heated by an oil bath to 100°C and was held for 2 hours while being agitated. After this, the flask was lifted up from the oil bath and allowed to stand until the colloidal suspension was cooled to room temperature. To completely reduce all of the ions in the flask, sodium borohydrate 0.038 g was added, then the suspension was allowed to stand for a while. The produced nanoparticles were refined by treating a certain fraction including a predetermined amount of nanoparticles by a large amount of acetone. Due to this, the PVP polymer protective material was extracted in the acetone phase, and the metal nanoparticles coagulated. The supernatant was transferred (decanted) or centrifuged to obtain the colloid. The acetone phase was removed, then the refined colloid was gently stirred to disperse in pure ethanol.

### 2. Carrying of AuNi Nanoparticles on Carrier

In a 100 ml Schlenk flask, 1 g of the carrier (Al₂O₃) was inserted. The inside of the Schlenk flask was evacuated, then N₂ was run into it to clean the piping and completely remove the air. The concentration of the suspension of the colloid previously synthesized (both the refined colloid and remaining solution) was determined in advance, and a refined colloidal suspension containing Rh0.5wt% molar equivalents of amounts of gold and nickel metal was poured through a rubber septum into the Schlenk flask. The mixture was agitated at room temperature for 3 hours, then the solvent was removed by vacuum. After this, the remaining polymer protective material of the colloidal precipitate was removed and the result dried at 200 to 600°C by vacuum heating. The obtained catalyst powder was pressed to obtain pellets of approximately 2 mm size.

### 3. Evaluation of Catalyst

The obtained AuNi (50:50)/Al₂O₃ catalyst was measured for shape, particle size distribution, and elemental analysis of the alloy particles by TEM and TEM-EDS. The size of the nanoparticles was 3.75 nm±0.70 nm. Further, from the TEM-EDS spectrum measured for an AuNi (50:50) colloid on a copper coated grid, it is shown that all individual particles include gold and nickel. Furthermore, the obtained AuNi (50:50)/Al₂O₃ catalyst was measured for NO purification characteristics under the following gas flow conditions.

### Gas flow conditions

Gas composition: NO 1000 ppm, CO 1000 ppm, N₂ bal/10 liter
Flow rate: 500 ml/min, pellets: 150 mg,
Space velocity: 3.3 liters/min·g
Ni, base metal concentrations: each 0.0486 mmol/g-cat

The results are shown together with other results in FIG. 1.

### Comparative Example 1

Except for not using the solution 1, the same procedure was followed as in Reference Example 1 to obtain an Au/Al₂O₃ catalyst. The obtained Au/Al₂O₃ catalyst was measured for NO purification characteristics in the same way as in Reference Example 1. The results are shown together with other results in FIG. 1.

### Comparative Example 2

### Synthesis of Nickel Nanoparticles

In a two-necked flask, 1.1 g of poly-n-vinylpyrrolidone (PVP) was added to 120 ml of anhydrous ethylene glycol. Into this mixture, 0.1404 g of nickel sulfate was added. The mixture was agitated at 80°C for 3 hours. The obtained solution was cooled to 0°C and the pH was adjusted to 9 to 10. Next, the mixed solution was heated by an oil bath to 180°C and was held for 2 hours while being agitated. After this, the flask was lifted up from the oil bath and allowed to stand until the colloidal suspension was cooled to room temperature. The produced nanoparticles were refined by treating a certain fraction including a predetermined amount of nanoparticles by a large amount of acetone. Due to this, the protective PVP was extracted in the acetone phase, and the metal nanoparticles coagulated. The supernatant was decanted or centrifuged to obtain the colloid. The acetone phase was removed, then the refined colloid was gently stirred to disperse in pure ethanol.

### Carrying of Nickel Nanoparticles

In a 100 ml Schlenk flask, 1 g of the carrier (Al₂O₃) was inserted. The inside of the Schlenk flask was evacuated, then N₂ was used to purge the piping. The concentration of the suspension of the colloid previously synthesized (both the refined colloid and remaining solution) was determined in advance, and a refined colloidal suspension containing Rh0.5wt% molar equivalents of amounts of nickel metal was poured into the Schlenk flask. The mixture was agitated at room temperature for 3 hours, then the solvent was removed by vacuum. After this, the remaining protective material of the colloidal precipitate was removed and the result dried at 200 to 600°C by firing in a vacuum or in the air. The obtained catalyst powder was pressed to obtain Ni/Al₂O₃ catalyst pellets of approximately 2 mm size. The obtained Ni/Al₂O₃ catalyst was measured in the same way as in Reference Example 1 for NO purification characteristics. The results are shown together with other results in FIG. 1.

### Comparative Example 3

Except for separately using, as two types of metal salts, nickel sulfate and NaAuCl₄, the same procedure was followed as in Comparative Example 2 to cause metal to precipitate by evaporation of a gold and nickel mixed metal ion solution and thereby obtain (Au+Ni)mixture/Al₂O₃ catalyst pellets in which gold and nickel are not present in a state of close proximity. The obtained catalyst was measured in the same way as in Reference Example 1 for NO purification characteristics. The results are shown together with other results in FIG. 1.

### Reference Example 2

Except for changing the carrier particles from Al₂O₃ to CeO₂-ZrO₂(CZ), the same procedure was followed as in Reference Example 1 to obtain an AuNi(50:50)/CZ catalyst. The obtained AuNi(50:50)/CZ catalyst was measured for shape and particle size distribution of the alloy particles and analyzed by elementary analysis by TEM and TEM-EDS. The nanoparticles had a size of 3.61 nm±0.9 nm. Further, from the TEM-EDS spectrum measured for the AuNi(50:50) colloid on the Cu covered grid, all of the individual particles contained Au and Ni. Further, the obtained AuNi(50:50)/CZ catalyst was measured for catalytic activity under the following conditions and various gas flow conditions.
Space Velocity (SV): 100000 (0.6g, 1L/min)

All conditions are stoichiometry, N₂ balance

The O₂, H₂ treatment is performed under 500 °C before the catalytic activity test

### Gas flow conditions

(1) NO: 3000 ppm, CO: 3000 ppm
(2) NO: 1500 ppm, CO: 6500 ppm, O₂: 7000 ppm, C₃H₆: 1000 ppm
(3) NO: 3000 ppm, CO: 1500 ppm, C₃H₆: 167 ppm
(4) NO: 1500 ppm, CO: 1.55%, O₂: 7000 ppm,
(5) NO: 3000 ppm, CO: 3000 ppm, CO₂: 10%
(6) NO: 3000 ppm, CO: 3000 ppm, H₂O: 3%

The obtained results are shown together with other results in FIG. 2.

### Examples 1 to 2

In the apparatus used for measurement of the catalytic activity described above, as the HC oxidation catalyst, Pd/CeO₂ prepared by an ordinary method (Example 1) or Ag/Al₂O₃ prepared by an ordinary method (Example 2) was placed upstream of the NOₓ purification catalyst. As the NOₓ purification catalyst, the AuNi(50:50)/CZ catalyst obtained in Reference Example 2 was used to prepare the exhaust gas purification system. This exhaust gas purification system was fed with gas of the gas composition (2) to purify the exhaust gas and obtain NO purification characteristics the same as the curve shown by the curve 5 of FIG. 2. The above results show that according to the exhaust gas purification system of the present invention, the NO purification characteristics are greatly improved from the curve 2 to the curve 5 of FIG. 2.

According to the exhaust purification system of the present invention, from the viewpoint of resource depletion, by using an NOₓ purification catalyst using gold and nickel present in about the same extent as copper, the heating temperature for raising the NOₓ purification activity does not have to be made a high temperature like in the past, and there is an NOₓ purification activity even in an oxidizing atmosphere, so use of fuel for making the atmosphere a reducing state becomes unnecessary or at least can be greatly reduced, and a high NOₓ purification performance can be obtained over a broad range of exhaust gas compositions.

### Explanation of References

Curve 1. Relationship of temperature and NO purification rate in NO-CO gas composition
Curve 2. Relationship of temperature and NO purification rate in NO-CO-O₂-C₃H₆ exhaust gas composition
Curve 3. Relationship of temperature and NO purification rate in NO-CO-C₃H₆ exhaust gas composition
Curve 4. Relationship of temperature and NO purification rate in NO-CO-O₂ exhaust gas composition
Curve 5. Relationship of temperature and NO purification rate in NO-CO-CO₂ exhaust gas composition
Curve 6. Relationship of temperature and NO purification rate in NO-CO-H₂O exhaust gas composition

1. exhaust gas purification system
2. engine
3. exhaust gas passage
4. A/F meter
5. NOₓ purification catalyst
6. oxidation catalyst oxidizing HC
7. HC adsorbent

While the invention has been described with reference to specific embodiments chosen for purpose of illustration, it should be apparent that numerous modifications could be made thereto by those skilled in the art without departing from the basic concept and scope of the invention.

## Claims

1. An exhaust gas purification system (1) provided with an NOₓ purification catalyst (5) provided in an exhaust gas passage (3), **characterized in that** said NOₓ purification catalyst (5) comprised of carrier particles on which nanoparticles of an alloy of gold atoms and nickel atoms in a state in close proximity are carried and an oxidation catalyst (6) oxidizing hydrocarbons in exhaust gas at a position at an upstream side of the NOₓ purification catalyst (5).

2. An exhaust gas purification system (1) as set forth in claim 1, wherein the nanoparticles have a size of 0.2 to 100 nm.

3. An exhaust gas purification system (1) as set forth in any one of claims 1 or 2, wherein the carrier particles are metal oxide particles.

4. An exhaust gas purification system (1) as set forth in any one of claims 1 to 3, further provided with a hydrocarbon adsorbent (7) that adsorbs hydrocarbons in the exhaust gas at a position in the exhaust gas passage (3) at a further upstream side from the oxidation catalyst (6).

## Patentansprüche

1. Abgasreinigungssystem (1), das bereitgestellt wird mit einem NOₓ-Reinigungskatalysator (5), der in einem Abgaskanal (3) vorgesehen ist, **dadurch gekennzeichnet, dass** der NOₓ-Reinigungskatalysator (5) Trägerteilchen umfasst auf denen Nanoteilchen einer Legierung aus Goldatomen und Nickelatomen in einem Zustand in unmittelbarer Nähe geträgert sind, und einem Oxidationskatalysator (6), der Kohlenwasserstoffe im Abgas oxidiert, an einer Position an der stromaufwärts liegenden Seite des NOₓ-Reinigungskatalysators (5).

2. Abgasreinigungssystem (1) nach Anspruch 1, wobei die Nanoteilchen eine Größe von 0,2 bis 100 nm aufweisen.

3. Abgasreinigungssystem (1) nach einem der Ansprüche 1 oder 2, wobei die Trägerteilchen Metalloxidteilchen sind.

4. Abgasreinigungssystem (1) nach einem der Ansprüche 1 bis 3, das ferner bereitgestellt wird mit einem Kohlenwasserstoffadsorptionsmittel (7), das Kohlenwasserstoffe im Abgas an einer Position im Abgaskanal (3) adsorbiert, an einer weiter stromaufwärts liegenden Seite des Oxidationskatalysators (6).

## Revendications

1. Système de purification de gaz d'échappement (1) muni d'un catalyseur de purification de NOₓ (5) disposé dans un passage de gaz d'échappement (3), **caractérisé en ce que** ledit catalyseur de purification de NOₓ (5) comprend des particules de support sur lesquelles des nanoparticules d'un alliage d'atomes d'or et d'atomes de nickel dans un état de proximité immédiate sont portées et un catalyseur d'oxydation (6) oxydant les hydrocarbures dans le gaz d'échappement à une position d'un côté amont du catalyseur de purification de NOₓ (5).

2. Système de purification de gaz d'échappement (1) selon la revendication 1, où les nanoparticules ont une taille de 0,2 à 100 nm.

3. Système de purification de gaz d'échappement (1) selon l'une quelconque des revendications 1 et 2, où les particules de support sont des particules d'oxyde métallique.

4. Système de purification de gaz d'échappement (1) selon l'une quelconque des revendications 1 à 3, muni en outre d'un adsorbant d'hydrocarbures (7) qui adsorbe les hydrocarbures dans le gaz d'échappement à une position dans le passage de gaz d'échappement (3) encore d'un côté amont du catalyseur d'oxydation (6).
